# EUROPEAN PATENT SPECIFICATION

(11) **EP 4 357 807 B1**
(45) Date of publication and mention of the grant of the patent: **01.07.2026**
(21) Application number: 22202538.9
(22) Date of filing: 19.10.2022
(51) Int. Cl.: G01S 13/931, G01S 7/41, G01S 13/72, G01S 13/58, G08G 1/16, B60W 40/04, B60W 50/14, B60W 30/095, G06F 18/213

(54) **VEHICLE DETECTION SYSTEM AND METHOD FOR DETECTING A TARGET VEHICLE IN A DETECTION AREA LOCATED BEHIND A SUBJECT VEHICLE**
FAHRZEUGERKENNUNGSSYSTEM UND VERFAHREN ZUM ERKENNEN EINES ZIELFAHRZEUGS IN EINEM HINTER EINEM SUBJEKTFAHRZEUG BEFINDLICHEN ERFASSUNGSBEREICH
SYSTÈME DE DÉTECTION DE VÉHICULE ET PROCÉDÉ DE DÉTECTION D'UN VÉHICULE CIBLE DANS UNE ZONE DE DÉTECTION SITUÉE DERRIÈRE UN VÉHICULE SUJET

(43) Date of publication of application: 24.04.2024
(73) Proprietor: AUMOVIO Autonomous Mobility Germany GmbH, 85057 Ingolstadt (DE); Toyota Jidosha Kabushiki Kaisha, Aichi-Ken 471-8571 (JP)
(72) Inventor: Hashimoto, Yuki, 339780 Singapore (SG); Kohara, Takahiro, Toyota-shi, 471-8571 (JP); Mochizuki, Tomohiko, Toyota-shi, 471-8571 (JP); Nohara, Takayoshi, Toyota-shi, 471-8571 (JP); Takahashi, Masahiro, Toyota-shi, 471-8571 (JP)
(74) Representative: Kilian Kilian & Partner mbB

(56) References cited:
- CN-A- 110 435 650
- US-B2- 11 027 653

## Description

### TECHNICAL FIELD

The invention relates to a vehicle detection system for detecting a target vehicle in a detection area located behind a subject vehicle. Furthermore, the invention relates to a method for detecting a target vehicle in a detection area located behind a subject vehicle, particularly for controlling a vehicle detection system.

Moreover, the invention relates to a driver assistance system for a vehicle, comprising such a vehicle detection system, a corresponding computer program for carrying out the method and a respective computer-readable medium.

### BACKGROUND

Conventional Driver Assistance Systems or Advanced Driver Assistance Systems (ADAS) for vehicles are widely used, for example, in connection with conventional vehicles as well as autonomous vehicles.

Many vehicle accidents are caused by human error, which might have been avoided by means of such Advanced Driver Assistance Systems (ADAS). Commonly known safety-critical ADAS applications include pedestrian detection/avoidance, lane departure warning/correction, traffic sign recognition, automatic emergency braking and blind spot detection, for example. Long range radars are usually used for applications like emergency brake assist and adaptive cruise control, while short-range-radars are often employed in connection with applications like blind spot detection (BSD), rear-cross-traffic-alert, lane-change-assist and rear pre-crash systems, for example.

For example, such rear pre-crash systems track vehicles approaching from behind of a subject vehicle, for example, in a lane or driving lane of the subject vehicle or from an adjacent lane being adjacent to the lane of the subject vehicle and, in the event of an imminent collision, pre-activate safety devices such as indicators (optical or acoustic indicators), airbags, seat belts etc.

In case in such a system a target vehicle which approaches a subject vehicle from behind, is detected by radars which, for example, uses L-RTAN or Long-range Rear Approaching Target Notification for a long range detection area and RTAN or Rear Approaching Target Notification for a short range detection area, triggering of a warning signal by L-RTAN or by RTAN may be considered unnecessary if the target vehicle changes from a first adjacent lane which is adjacent to a driving lane of the subject vehicle to a second adjacent lane which is opposite to the first adjacent lane with respect to the driving lane and diagonally crosses the driving lane, for example, when the target vehicle is going to pass the subject vehicle. However, the estimation of a crossing the driving lane by the target vehicle, for example on the basis of Time-to-Exit (TTE), can be difficult and inaccurate, especially at large distances to the target vehicle. Thus the target vehicle may temporarily appear to merge in in the driving lane instead of continuously passing the driving lane. This behavior can erroneously lead to the target vehicle being regarded as a merge-in target vehicle and a warning signal triggered by RTAN and/or L-RTAN possibly being issued.

Further prior art is known from CN 110 435 650 A that shows a vehicle rear-end collision emergency avoidance method, system and equipment and a storage medium. The vehicle rear collision emergency avoidance system comprises data acquisition modules, judging modules and avoidance modules and a processor. CN 110 435 650 A aims to carry out a real-time monitoring and detect collisions that may occur behind the vehicle according to driving conditions of vehicles and road conditions.

### SUMMARY OF THE INVENTION

A vehicle detection system according to the invention is for detecting a target vehicle in a detection area located behind a subject vehicle, the vehicle detection system comprising judging means configured to judge whether a target vehicle which has been detected to approach the subject vehicle occupying a driving lane from behind in a first adjacent lane which is on one side of the driving lane and which target vehicle has been further detected to change from the first adjacent lane by diagonally passing the driving lane on to a second adjacent lane on the other side of the driving lane, is an alert object, to output a result of judgement to warning means which warns a driver of the subject vehicle that a target vehicle is present behind the subject vehicle based on the judging means judging the target vehicle to be an alert object, and to determine, on the basis of a change of a lateral overlap of the target vehicle in the detection area, which lateral overlap corresponds to a proportion of the target vehicle's width with which the target vehicle is actually in the detection area, an overlap change rate which represents the change in size of the lateral overlap over a specified time, wherein the judging means is configured to judge the target vehicle to be an alert object or to be not an alert object on the basis of the overlap change rate.

By using the overlap change rate, a very accurate determination and prediction of the actual line of travel of the target vehicle can be made while the target vehicle passes the driving lane while changing from the first adjacent lane to the opposite second adjacent lane. Consequently, unnecessary alarm warnings/activations can be avoided.

Advantageously, the judging means is configured to output a result of judgement to the warning means which result of judgement indicates to the warning means to suppress a warning even if a target vehicle has been detected, based on the judging means judging the target vehicle to be not an alert object.

Preferably, the detection area of the subject vehicle corresponds to a region of the driving lane of and behind the subject vehicle. The detection area may further comprise at least a region of the first adjacent lane and/or at least a region of the second adjacent lane.

Preferably, the lateral overlap of the target vehicle in the detection area is determined starting from a longitudinal reference line which the target vehicle crosses during its lane change from the first adjacent lane to the second adjacent lane and is measured in transverse direction.

Furthermore, the vehicle detection system may be configured such that the longitudinal reference line is a transition line at the side of the detection area.

Preferably, the judging means is configured to judge the target vehicle to be not an alert object if the lateral overlap of the target vehicle continuously increases during diagonally passing the driving lane.

Advantageously, the overlap change rate is defined as the difference between an actual lateral overlap and a previous lateral overlap divided by a cycle time of a determination cycle, in particular of a cycle time of 0,05s. An overlap change rate warning threshold is set to be in the range of 1.0m/s to 1.5m/s and preferably 1.3m/s and the judging means is further configured to judge the target vehicle to be not an alert object if the overlap change rate exceeds this overlap change rate warning threshold.

According to a preferred embodiment the judging means is further configured to determine a lateral TTE (Time-to-Exit) of the target vehicle for moving out of the driving lane, by calculating the ratio of lateral overlap of the target vehicle to lateral velocity of the target vehicle, and is configured for the judgement carried out in repeated determination cycles whether TTE is lower than 4.0s or TTE is 4.0s or greater than 4.0s and if TTE is lower than 4.0s to set a delay timer on a minimum value between TTE and 1.5s and to judge the target vehicle to be not an alert object (which means suppressing the warning signal), until delay timer is expired, and if TTE is 4.0s or greater than 4.0s to judge the target vehicle to be an alert object (which means not suppressing the warning signal).

Consequently, the vehicle detection system can be set up in such a way that a warning signal is temporarily suppressed for short duration if an overlap change of the target vehicle suddenly increases, in particular above a certain warning threshold.

A driver assistance system according to the invention is provided for a subject vehicle and comprises detecting means for detecting a target vehicle in a detection area located behind the subject vehicle, the vehicle detection system according to the invention as described above and warning means for warning a driver of the subject vehicle that a target vehicle is present in the detection area or in the driving lane only if the judging means of the vehicle detection system judged the target vehicle to be an alert object.

Moreover, the driver assistance system according to the invention can be further configured such that the detecting means comprises radar sensors for detecting a target vehicle in the detection area, in particular radar sensors for Rear Approaching Target Notification (RTAN) and for Long-range Rear Approaching Target Notification (L-RTAN). The judgement of the judging means may be based on either the L-RTAN radar detection or on RTAN radar detection or on both detections and is preferably based on the L-RTAN radar detection.

A vehicle according to the invention, preferably an autonomous vehicle, comprises a driver assistance system according to the invention as described above.

A computer-implemented method according to the invention is for detecting a target vehicle in a detection area located behind a subject vehicle, for controlling a vehicle detection system according to the invention as described above, and comprises the following steps: judging whether a target vehicle which has been detected to approach the subject vehicle occupying a driving lane from behind in a first adjacent lane which is on one side of the driving lane and which target vehicle has been further detected to change from the first adjacent lane by diagonally passing the driving lane on to a second adjacent lane on the other side of the driving lane is an alert object, outputting a result of judgement to warning means which warns a driver of the subject vehicle that a target vehicle is present behind the subject vehicle based on the judging means judging the target vehicle to be an alert object, and determining, on the basis of a change of a lateral overlap of the target vehicle in the detection area, which lateral overlap corresponds to a proportion of the target vehicle's width with which the target vehicle is actually in the detection area, an overlap change rate which represents the change in size of the lateral overlap over a specified time, and judging the target vehicle to be an alert object or to be not an alert object on the basis of the overlap change rate.

Moreover, the method can be further modified such that the overlap change rate is defined as the difference between an actual lateral overlap and a previous lateral overlap divided by a cycle time of a determination cycle, in particular of a cycle time of 0,05s.

Preferably, an overlap change rate warning threshold is set to be in the range of 1.0m/s to 1.5m/s and preferably 1.3m/s. The judging means may further be configured to judge the target vehicle to be not an alert object if the overlap change rate exceeds this overlap change rate warning threshold.

Accordingly, the properties and advantages explained in connection with the vehicle detection system according to the invention arise in the same or similar manner in respect of the method for detecting a target vehicle in a detection area located behind a subject vehicle according to the present invention, which is why, in order to avoid repetitions, reference is made to the respective explanations with respect to the vehicle detection system according to the invention.

A computer program according to the present invention comprises instructions which, when the program is executed by a computer, cause the computer to carry out the method according to the present invention.

A non-transitory computer-readable medium according to the present invention has stored thereon the computer program according to the invention.

### BRIEF DESCRIPTION OF THE DRAWINGS

Preferred embodiments and advantages of the invention will become more apparent upon reading the following detailed description along with the accompanying drawings in which:
FIG. 1 shows a subject vehicle and a target vehicle which approaches the subject vehicle form behind and changes the lane, with the target vehicle shown in two positions; and
FIG. 2 shows a schematic configuration of a driver assistance system according to the invention.

### DETAILED DESCRIPTION

With reference to the drawings, one preferred embodiment of the present invention will now be specifically described for illustrative purposes. It is to be understood that components or elements in this embodiment will be shown and described by way of examples only, but are not intended to limit this invention to them.

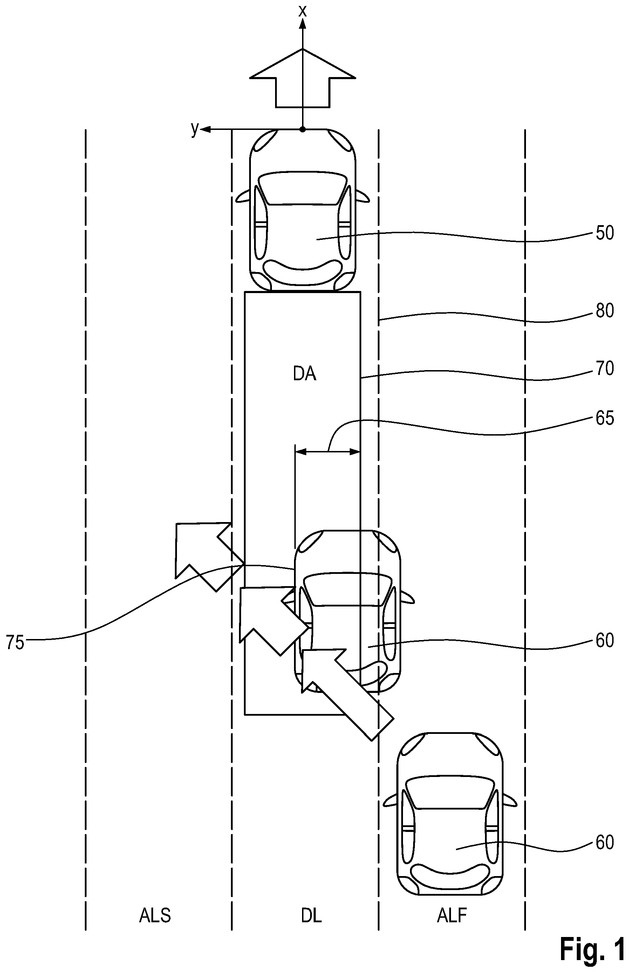

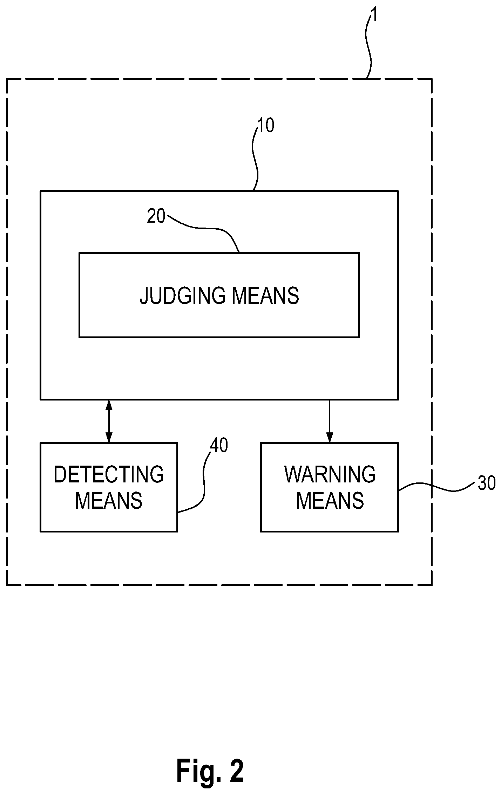

FIG. 1 shows one embodiment of a vehicle or subject vehicle 50 according to the invention, which is provided with a driver assistance system 1 according to the invention which will be described in connection with FIG. 2.

As can be gathered from FIG. 2, the driver assistance system 1 provided in the subject vehicle 50 comprises a vehicle detection system 10 according to the invention, detecting means 40 and warning means 30.

The detecting means 40 is for detecting a target vehicle 60 in a detection area DA located behind the subject vehicle 50, which will be described below.

In this embodiment, the detecting means 40 comprises radar sensors for detecting a target vehicle 60 in the detection area DA. These sensors may be part of a conventional (rear-) cross-traffic alert system, for example, and are capable of detecting at least a relative position of the target vehicle 60 with respect to the subject vehicle 50, a relative speed/ velocity of the target vehicle 60 with respect to the subject vehicle 50, respectively, in the x- and y-directions as shown in FIG. 1. In this case, the x-direction shown in FIG. 1 corresponds to the longitudinal direction of the subject vehicle 50 and the target vehicle 60, while the y-direction shown in FIG. 1 corresponds to the transverse direction of the subject vehicle 50 and the target vehicle 60.

Preferably, the detecting means 40 comprises radar sensors for Rear Approaching Target Notification (RTAN) and for Long-range Rear Approaching Target Notification (L-RTAN). The judgement of the judging means may be based on either the L-RTAN radar detection or on RTAN radar detection or on both detections.

The warning means 30 is for warning a driver of the subject vehicle 50 that a target vehicle 60 is present in the detection area DA. For example, the warning means 30 may be a conventional visual or audible indicator (display or speaker) capable of notifying the driver of the subject vehicle 50 that the target vehicle 60 is present in the detection area DA and, for example, may fall below a safety distance from the subject vehicle 50.

The vehicle detection system 10 according to the invention can be formed by a computer or processor and is in particular for detecting a target vehicle 60 in the detection area DA located behind the subject vehicle 50. The detection area DA of the subject vehicle 50 (Fig. 1) corresponds, in particular in the width or in the transverse direction, completely or to a certain extent to an area of the driving lane DL of the subject vehicle 50. The detection area DA may also comprise, completely or to a certain extent, the adjacent area or first adjacent lane ALF being located lateral/adjacent to the detection area DA or the driving lane DL and from which the target vehicle 60 starts for diagonally crossing the driving lane DL behind the subject vehicle 50. Moreover, the detection area DA may also comprise, completely or to a certain extent, the adjacent area or second adjacent lane ALS being located lateral/adjacent to the detection area DA or the driving lane DL and opposite to the first adjacent lane ALF with respect to the driving lane DL. The target vehicle 60 moves to this second adjacent lane ALS while crossing the driving lane DL.

The vehicle detection system 10 comprises judging means 20 for judging whether a target vehicle 60 which has been detected to enter the detection area DA is an alert object or not an alert object, and for outputting a result of judgement to the warning means 30.

While approaching the subject vehicle 50 from behind the target vehicle 60 changes from the first adjacent lane ALF to the driving lane DL and further to the second adjacent lane ALS, in particular when passing the subject vehicle 50 is intended.

When changing lanes, the target vehicle 60 occupies the detection area DA with a lateral overlap 65 of increasing size. The lateral overlap 65 is the distance in transverse or y-direction between a reference position or reference line 70 and a side part 75 of the target vehicle 60 which is within the driving lane DL and within the detection area DA and which is opposite to the reference line 70. This side part 75 of the target vehicle 60 is, for example, on the left side of the target vehicle 60 according to the representation in Fig. 1. The reference line 70 is, for example, the sideline of the detection area DA or the sideline or transition line 80 of the driving lane DL to the first adjacent lane ALF, dependent of the size or width of the detection area DA. The lateral overlap 65 therefore corresponds to the proportion of the target vehicle's width with which the target vehicle 60 is actually in the detection area DA. During lane change of the target vehicle 60 from the driving lane DL to the second adjacent lane ALS the size of the lateral overlap 65 increases, in particular continuously. This change of size of the lateral overlap 65 is detected by the detecting means 40.

The judging means 20 determines an overlap change rate on the basis of the changing lateral overlap 65 of the target vehicle 60 during lane change. Such, the overlap change rate represents the change in size of the lateral overlap 65 over time, for example, over a specified time like a cycle time of a determination cycle. The determination of the overlap change rate is carried out in cycles with a cycle time of 0.05s, for example.

The overlap change rate is defined as the difference between an actual lateral overlap and a previous lateral overlap divided by the cycle time.

An overlap change rate warning threshold is set to be in the range of 1.0m/s to 1.5m/s and preferably 1.3m/s. The judging means 20 is configured to judge the target vehicle 60 to be not an alert object if the overlap change rate exceeds this overlap change rate warning threshold while the target vehicle 60 enters the detection area DA and keeps this value of the overlap change rate warning threshold. Otherwise, the judging means 20 judges the target vehicle 60 to be an alert object.

If the overlap change rate exceeds this overlap change rate warning threshold the judging means 20 determines a lateral TTE (Time-to-Exit) of the target vehicle 60 for moving out of the detection area DA. TTE may be determined, for example, by calculating the ratio of lateral overlap of the target vehicle 60 to lateral velocity of the target vehicle 60 or may be evaluated in other ways, such as by simulation or experimentation. The judging means 20 further judges, in repeated determination cycles, whether TTE is lower than 4.0s or TTE is 4.0s or greater than 4.0s.

If TTE is lower than 4.0s a delay timer is set on a minimum value between TTE and 1.5s and the target vehicle 60 is judged to be not an alert object until the delay timer is expired. In this case, a warning signal is suppressed for a maximum of 1.5s before the delay timer is set again.

If TTE is 4.0s or greater than 4.0s the judging means 20 judges the target vehicle 60 to be an alert object.

Thus, the judging means 20 is configured to judge the target vehicle 60 to be an alert object or to be not an alert object on the basis of the overlap change rate during lane change while crossing the driving lane DL.

Accordingly, the warning means 30 warns the driver of the subject vehicle 50 that a target vehicle 60 is present in the detection area DA only if the judging means 20 judged the target vehicle 60 to be an alert object. In the other case, no warning is output. That is, the warning means 30 is configured to output a warning to the driver of the subject vehicle 50 that a target vehicle 60 is present in the detection area DA based on the judging means 20 judging the target vehicle 60 to be an alert object and to suppress output of a warning even if a target vehicle 60 is detected in the detection area DA by the detecting means 40 based on the judging means 20 judging the target vehicle 60 to be not an alert object.

## Claims

1. A vehicle detection system (10) for detecting a target vehicle (60) in a detection area (DA) located behind a subject vehicle (50), the vehicle detection system (10) comprising judging means (20) configured
- to judge whether a target vehicle (60) which has been detected to approach the subject vehicle (50) occupying a driving lane (DL) from behind in a first adjacent lane (ALF) which is on one side of the driving lane (DL) and which target vehicle (60) has been further detected to change from the first adjacent lane (ALF) by diagonally passing the driving lane (DL) on to a second adjacent lane (ALS) on the other side of the driving lane (DL), is an alert object,
- to output a result of judgement to warning means (30) which warns a driver of the subject vehicle (50) that a target vehicle (60) is present behind the subject vehicle (50) based on the judging means (20) judging the target vehicle (60) to be an alert object, and
**characterized by** being further configured
- to determine, on the basis of a change of a lateral overlap (65) of the target vehicle (60) in the detection area (DA), which lateral overlap (65) corresponds to a proportion of the target vehicle's width with which the target vehicle (60) is actually in the detection area (DA), an overlap change rate which represents the change in size of the lateral overlap (65) over a specified time,
wherein the judging means (20) is configured to judge the target vehicle (60) to be an alert object or to be not an alert object on the basis of the overlap change rate.

2. The vehicle object detection system (10) according to claim 1, wherein the detection area (DA) of the subject vehicle (50) corresponds to a region of the driving lane (DL) of and behind the subject vehicle (50), and in particular at least a region of the first adjacent lane (ALF) and/or at least a region of the second adjacent lane (ALS).

3. The vehicle detection system (10) according to claim 1 or 2,
wherein the lateral overlap (65) of the target vehicle (60) in the detection area (DA) is determined starting from a longitudinal reference line (70) which the target vehicle (60) crosses during its lane change from the first adjacent lane (ALF) to the second adjacent lane (ALS) and is measured in transverse direction.

4. The vehicle detection system (10) according to claim 3,
wherein said longitudinal reference line (70) is a transition line (80) at the side of the detection area (DA).

5. The vehicle detection system (10) according to one of claims 1 to 4,
wherein the judging means (20) is configured to judge the target vehicle (60) to be not an alert object if the lateral overlap (65) of the target vehicle (60) continuously increases while diagonally passing the driving lane (DL).

6. The vehicle detection system (10) according to one of claims 1 to 5, wherein the judging means (20) is configured to output a result of judgement to the warning means (30) which result of judgement indicates to the warning means (30) to suppress a warning even if a target vehicle (60) has been detected, based on the judging means (20) judging the target vehicle (60) to be not an alert object.

7. The vehicle detection system (10) according to one of claims 1 to 6, wherein
the overlap change rate is defined as the difference between an actual lateral overlap and a previous lateral overlap divided by a cycle time of a determination cycle, in particular of a cycle time of 0,05s, and
an overlap change rate warning threshold is set to be in the range of 1.0m/s to 1.5m/s and preferably 1.3m/s and the judging means (20) is further configured to judge the target vehicle (60) to be not an alert object if the overlap change rate exceeds this overlap change rate warning threshold.

8. The vehicle detection system (10) according to one of claims 1 to 7,
wherein the judging means (20) is further configured to determine a lateral TTE (Time-to-Exit) of the target vehicle (60) for moving out of the driving lane (DL), by calculating the ratio of lateral overlap of the target vehicle (60) to lateral velocity of the target vehicle (60), and is configured for the judgement carried out in repeated determination cycles whether TTE is lower than 4.0s or TTE is 4.0s or greater than 4.0s and
- if TTE is lower than 4.0s to set a delay timer on a minimum value between TTE and 1.5s and to judge the target vehicle (60) to be not an alert object until delay timer is expired,
- if TTE is 4.0s or greater than 4.0s to judge the target vehicle (60) to be an alert object.

9. A driver assistance system (1) for a subject vehicle (50), comprising:
detecting means (40) for detecting a target vehicle (60) in a detection area (DA) located behind the subject vehicle (50),
a vehicle detection system (10) according to one of claims 1 to 8, and
warning means (30) for warning a driver of the subject vehicle (50) that a target vehicle (60) is present in the detection area (DA) or in the driving lane (DL) only if the judging means (20) of the vehicle detection system (10) judged the target vehicle (60) to be an alert object.

10. The driver assistance system (1) according to claim 9,
wherein the detecting means (40) comprises radar sensors for detecting a target vehicle (60) in the detection area (DA), in particular radar sensors for Rear Approaching Target Notification (RTAN) and for Long-range Rear Approaching Target Notification (L-RTAN) and wherein the judgement of the judging means (20) is preferably based on the L-RTAN radar detection.

11. A vehicle, preferably autonomous vehicle, comprising a driver assistance system (1) according to claims 9 or 10.

12. A computer-implemented method for detecting a target vehicle (60) in a detection area (DA) located behind a subject vehicle (50), for controlling a vehicle detection system (10) according to one of claims 1 to 8, wherein the method comprises the following steps:
judging whether a target vehicle (60) which has been detected to approach the subject vehicle (50) occupying a driving lane (DL) from behind in a first adjacent lane (ALF) which is on one side of the driving lane (DL) and which target vehicle (60) has been further detected to change from the first adjacent lane (ALF) by diagonally passing the driving lane (DL) on to a second adjacent lane (ALS) on the other side of the driving lane (DL), is an alert object,
outputting a result of judgement to warning means (30) which warns a driver of the subject vehicle (50) that a target vehicle (60) is present behind the subject vehicle (50) based on the judging means (20) judging the target vehicle (60) to be an alert object, and
**characterized by**
determining, on the basis of a change of a lateral overlap (65) of the target vehicle (60) in the detection area (DA), which lateral overlap (65) corresponds to a proportion of the target vehicle's width with which the target vehicle (60) is actually in the detection area (DA), an overlap change rate which represents the change in size of the lateral overlap (65) over a specified time, and
judging the target vehicle (60) to be an alert object or to be not an alert object on the basis of the overlap change rate.

13. The method according to claim 12,
wherein the overlap change rate is defined as the difference between an actual lateral overlap and a previous lateral overlap divided by a cycle time of a determination cycle, in particular of a cycle time of 0,05s.

14. The method according to claim 13,
wherein an overlap change rate warning threshold is set to be in the range of 1.0m/s to 1.5m/s and preferably 1.3m/s and the judging means (20) is further configured to judge the target vehicle (60) to be not an alert object if the overlap change rate exceeds this overlap change rate warning threshold.

15. A computer program comprising instructions which, when the program is executed by a computer, cause the computer to carry out the method of one of claims 12 to 14 for controlling a vehicle detection system (10) according to one of claims 1 to 8.

## Patentansprüche

1. Fahrzeugerfassungssystem (10) zum Erfassen eines Zielfahrzeugs (60) in einem Erfassungsbereich (DA), der sich hinter einem betreffenden Fahrzeug (50) befindet, wobei das Fahrzeugerfassungssystem (10) ein Bestimmungsmittel (20) umfasst, das eingerichtet ist zum:
- Bestimmen, ob das Zielfahrzeug (60), das als sich dem eine Fahrspur (DL) einnehmenden betreffenden Fahrzeug (50) von hinten nähernd in einer ersten Nachbarspur (ALF), die sich auf einer Seite der Fahrspur (DL) befindet, erfasst worden ist, und wobei das Zielfahrzeug (60) ferner als von der ersten Nachbarspur (ALF) durch diagonales Überqueren der Fahrspur (DL) auf eine zweite Nachbarspur (ALS) auf der anderen Seite der Fahrspur (DL) wechselnd erfasst worden ist, ein Warnobjekt ist,
- Ausgeben eines Ergebnisses der Bestimmung an ein Warnmittel (30), das einen Fahrer des betreffenden Fahrzeugs (50) warnt, dass sich ein Zielfahrzeug (60) hinter dem betreffenden Fahrzeug (50) befindet, basierend auf dem Bestimmungsmittel (20), welches das Zielfahrzeug (60) als ein Warnobjekt bestimmt, und **dadurch gekennzeichnet, dass** es ferner eingerichtet ist zum:
- Ermitteln, basierend auf einer Änderung einer seitlichen Überlappung (65) des Zielfahrzeugs (60) in dem Erfassungsbereich (DA), welche seitliche Überlappung (65) einem Anteil der Breite des Zielfahrzeugs entspricht, mit dem sich das Zielfahrzeug (60) tatsächlich im Erfassungsbereich (DA) befindet, einer Überlappungsänderungsrate, welche die Änderung der Größe der seitlichen Überlappung (65) über eine vorgebene Zeit darstellt,
wobei das Bestimmungsmittel (20) dazu eingerichtet ist, das Zielfahrzeug (60,) basierend auf der Überlappungsänderungsrate als ein Warnobjekt oder als kein Alarmobjekt zu bestimmen.

2. Fahrzeugobjekterfassungssystem (10) nach Anspruch 1, wobei der Erfassungsbereich (DA) des betreffenden Fahrzeugs (50) einem Bereich der Fahrspur (DL) des und hinter dem betreffenden Fahrzeug (50) entspricht, und insbesondere zumindest einem Bereich der ersten Nachbarspur (ALF) und/oder zumindest einem Bereich der zweiten Nachbarspur (ALS).

3. Fahrzeugerfassungssystem (10) nach Anspruch 1 oder 2,
wobei die seitliche Überlappung (65) des Zielfahrzeugs (60) in dem Erfassungsbereich (DA) ausgehend von einer Längsreferenzlinie (70), welche das Zielfahrzeug (60) während seines Spurwechsels von der ersten Nachbarspur (ALF) auf die zweite Nachbarspur (ALS) überquert, ermittelt wird und in Querrichtung gemessen wird

4. Fahrzeugerfassungssystem (10) nach Anspruch 3,
wobei die Längsreferenzlinie (70) eine Übergangslinie (80) an der Seite des Erfassungsbereichs (DA) ist.

5. Fahrzeugerfassungssystem (10) nach einem der Ansprüche 1 bis 4,
wobei das Bestimmungsmittel (20) dazu eingerichtet ist, das Zielfahrzeug (60) als kein Warnobjekt zu bestimmen, wenn die seitliche Überlappung (65) des Zielfahrzeugs (60) beim diagonalen Überqueren der Fahrspur (DL) kontinuierlich zunimmt.

6. Fahrzeugerfassungssystem (10) nach einem der Ansprüche 1 bis 5, wobei das Bestimmungsmittel (20) dazu eingerichtet ist, ein Ergebnis der Bestimmung an das Warnmittel (30) auszugeben, welches Ergebnis der Bestimmung dem Warnmittel (30) anzeigt, eine Warnung zu unterdrücken, selbst wenn ein Zielfahrzeug (60) erfasst worden ist, basierend darauf, dass das Bestimmungsmittel (20) bestimmt, dass das Zielfahrzeug (60) kein Warnobjekt ist.

7. Fahrzeugerfassungssystem (10) nach einem der Ansprüche 1 bis 6, wobei
die Überlappungsänderungsrate als die Differenz zwischen einer aktuellen seitlichen Überlappung und einer vorhergehenden seitlichen Überlappung dividiert durch eine Zykluszeit eines Bestimmungszyklus definiert ist, insbesondere einer Zykluszeit von 0,05 s, und
ein Überlappungsänderungsrate-Warnschwellenwert in einem Bereich von 1,0 m/s bis 1,5 m/s und vorzugsweise 1,3 m/s festgelegt ist und das Bestimmungsmittel (20) ferner dazu eingerichtet ist, das Zielfahrzeug (60) als kein Warnobjekt zu bestimmen, wenn die Überlappungsänderungsrate diesen Überlappungsänderungsrate-Warnschwellenwert überschreitet.

8. Fahrzeugerfassungssystem (10) nach einem der Ansprüche 1 bis 7,
wobei das Bestimmungsmittel (20) ferner dazu eingerichtet ist, eine laterale TTE (Time-to-Exit) des Zielfahrzeugs (60) zum Herausbewegen aus der Fahrspur (DL) zu ermitteln, durch Berechnen des Verhältnisses der seitlichen Überlappung des Zielfahrzeugs (60) zur lateralen Geschwindigkeit des Zielfahrzeugs (60), und dazu eingerichtet ist, für die in wiederholten Bestimmungszyklen durchgeführte Bestimmung zu bestimmen, ob die TTE kleiner als 4,0 s ist oder die TTE 4,0 s ist oder größer als 4,0 s ist, und
- wenn die TTE kleiner als 4,0 s ist, einen Verzögerungstimer auf einen Minimalwert zwischen der TTE und 1,5 s festzulegen und das Zielfahrzeug (60) als kein Warnobjekt zu bestimmen, bis der Verzögerungstimer abgelaufen ist,
- wenn die TTE 4,0 s ist oder größer als 4,0 s ist, das Zielfahrzeug (60) als ein Warnobjekt zu bestimmen.

9. Fahrerassistenzsystem (1) für ein betreffendes Fahrzeug (50), umfassend:
Erfassungsmittel (40) zum Erfassen eines Zielfahrzeugs (60) in einem Erfassungsbereich (DA), der sich hinter dem betreffenden Fahrzeug (50) befindet,
ein Fahrzeugerfassungssystem (10) nach einem der Ansprüche 1 bis 8, und
ein Warnmittel (30) zum Warnen eines Fahrers des betreffenden Fahrzeugs (50), dass sich ein Zielfahrzeug (60) in dem Erfassungsbereich (DA) oder in der Fahrspur (DL) befindet, nur dann, wenn das Bestimmungsmittel (20) des Fahrzeugerfassungssystems (10) das Zielfahrzeug (60) als ein Warnobjekt bestimmt hat.

10. Fahrerassistenzsystem (1) nach Anspruch 9,
wobei das Erfassungsmittel (40) Radarsensoren zum Erfassen eines Zielfahrzeugs (60) im Erfassungsbereich (DA) umfasst, insbesondere Radarsensoren für Rear Approaching Target Notification (RTAN) und für Long-range Rear Approaching Target Notification (L-RTAN), und wobei die Bestimmung des Bestimmungsmittels (20) vorzugsweise auf der L-RTAN-Radardetektion basiert.

11. Fahrzeug, vorzugsweise autonomes Fahrzeug, umfassend ein Fahrerassistenzsystem (1) nach Anspruch 9 oder 10.

12. Computerimplementiertes Verfahren zum Erfassen eines Zielfahrzeugs (60) in einem Erfassungsbereich (DA), der sich hinter einem betreffenden Fahrzeug (50) befindet, zum Steuern eines Fahrzeugerfassungssystems (10) nach einem der Ansprüche 1 bis 8, wobei das Verfahren die folgenden Schritte umfasst:
Bestimmen, ob das Zielfahrzeug (60), das als sich dem eine Fahrspur (DL) einnehmenden betreffenden Fahrzeug (50) von hinten nähernd in einer ersten Nachbarspur (ALF), die sich auf einer Seite der Fahrspur (DL) befindet, erfasst worden ist, und wobei das Zielfahrzeug (60) ferner als von der ersten Nachbarspur (ALF) durch diagonales Überqueren der Fahrspur (DL) auf eine zweite Nachbarspur (ALS) auf der anderen Seite der Fahrspur (DL) wechselnd erfasst worden ist, ein Warnobjekt ist,
Ausgeben eines Ergebnisses der Bestimmung an ein Warnmittel (30), das einen Fahrer des betreffenden Fahrzeugs (50) warnt, dass sich ein Zielfahrzeug (60) hinter dem betreffenden Fahrzeug (50) befindet, basierend auf dem Bestimmungsmittel (20), welches das Zielfahrzeug (60) als ein Warnobjekt bestimmt, und **dadurch gekennzeichnet**, durch:
Ermitteln, basierend auf einer Änderung einer seitlichen Überlappung (65) des Zielfahrzeugs (60) im Erfassungsbereich (DA), welche seitliche Überlappung (65) einem Anteil der Breite des Zielfahrzeugs entspricht, mit dem sich das Zielfahrzeug (60) tatsächlich im Erfassungsbereich (DA) befindet, einer Überlappungsänderungsrate, welche die Änderung der Größe der seitlichen Überlappung (65) über eine vorgegebene Zeit darstellt, und
Bestimmen, ob das Zielfahrzeug (60,) basierend auf der Überlappungsänderungsrate, ein Warnobjekt oder kein Warnobjekt ist.

13. Verfahren nach Anspruch 12,
wobei die Überlappungsänderungsrate als die Differenz zwischen einer aktuellen seitlichen Überlappung und einer vorhergehenden seitlichen Überlappung dividiert durch eine Zykluszeit eines Bestimmungszyklus definiert ist, insbesondere einer Zykluszeit von 0,05 s.

14. Verfahren nach Anspruch 13,
wobei ein Überlappungsänderungsrate-Warnschwellenwert in einem Bereich von 1,0 m/s bis 1,5 m/s und vorzugsweise 1,3 m/s festgelegt ist und das Bestimmungsmittel (20) ferner dazu eingerichtet ist, das Zielfahrzeug (60) als kein Warnobjekt zu bestimmen, wenn die Überlappungsänderungsrate diesen Überlappungsänderungsrate-Warnschwellenwert überschreitet.

15. Computerprogramm, umfassend Anweisungen, die, wenn das Programm von einem Computer ausgeführt wird, den Computer veranlassen, das Verfahren nach einem der Ansprüche 12 bis 14 zum Steuern eines Fahrzeugerfassungssystems (10) nach einem der Ansprüche 1 bis 8 durchzuführen.

## Revendications

1. Système de détection de véhicule (10) destiné à détecter un véhicule cible (60) dans une zone de détection (DA) située derrière un véhicule sujet (50), le système de détection de véhicule (10) comprenant des moyens de jugement (20) configurés
- pour juger si un véhicule cible (60), qui a été détecté comme s'approchant du véhicule sujet (50) occupant une voie de circulation (DL) par l'arrière dans une première voie adjacente (ALF) qui est d'un côté de la voie de circulation (DL) et lequel véhicule cible (60) a en outre été détecté comme changeant de la première voie adjacente (ALF) en passant en diagonale à travers la voie de circulation (DL) vers une deuxième voie adjacente (ALS) de l'autre côté de la voie de circulation (DL), constitue un objet d'alerte,
- pour délivrer un résultat de jugement à des moyens d'avertissement (30) qui avertissent un conducteur du véhicule sujet (50) de la présence d'un véhicule cible (60) derrière le véhicule sujet (50) sur la base du fait que les moyens de jugement (20) jugent que le véhicule cible (60) constitue un objet d'alerte, et **caractérisé en ce qu'**ils sont en outre configurés
- pour déterminer, sur la base d'un changement d'un chevauchement latéral (65) du véhicule cible (60) dans la zone de détection (DA), lequel chevauchement latéral (65) correspond à une proportion de la largeur du véhicule cible avec laquelle le véhicule cible (60) se trouve effectivement dans la zone de détection (DA), un taux de changement de chevauchement représentant le changement de la taille du chevauchement latéral (65) sur une durée spécifiée,
dans lequel les moyens de jugement (20) sont configurés pour juger que le véhicule cible (60) constitue un objet d'alerte ou ne constitue pas un objet d'alerte sur la base du taux de changement de chevauchement.

2. Système de détection d'objet de véhicule (10) selon la revendication 1, dans lequel la zone de détection (DA) du véhicule sujet (50) correspond à une région de la voie de circulation (DL) du véhicule sujet (50) et derrière celui-ci, et en particulier au moins une région de la première voie adjacente (ALF) et/ou au moins une région de la deuxième voie adjacente (ALS).

3. Système de détection de véhicule (10) selon la revendication 1 ou 2,
dans lequel le chevauchement latéral (65) du véhicule cible (60) dans la zone de détection (DA) est déterminé à partir d'une ligne de référence longitudinale (70) que le véhicule cible (60) franchit lors de son changement de voie de la première voie adjacente (ALF) vers la deuxième voie adjacente (ALS) et est mesuré dans une direction transversale.

4. Système de détection de véhicule (10) selon la revendication 3,
dans lequel ladite ligne de référence longitudinale (70) est une ligne de transition (80) située sur le côté de la zone de détection (DA).

5. Système de détection de véhicule (10) selon l'une des revendications 1 à 4,
dans lequel les moyens de jugement (20) sont configurés pour juger que le véhicule cible (60) ne constitue pas un objet d'alerte si le chevauchement latéral (65) du véhicule cible (60) augmente de manière continue pendant qu'il passe en diagonale à travers la voie de circulation (DL).

6. Système de détection de véhicule (10) selon l'une des revendications 1 à 5, dans lequel les moyens de jugement (20) sont configurés pour délivrer un résultat de jugement aux moyens d'avertissement (30), lequel résultat de jugement indique aux moyens d'avertissement (30) de supprimer un avertissement même si un véhicule cible (60) a été détecté, sur la base du fait que les moyens de jugement (20) jugent que le véhicule cible (60) ne constitue pas un objet d'alerte.

7. Système de détection de véhicule (10) selon l'une des revendications 1 à 6, dans lequel
le taux de changement de chevauchement est défini comme la différence entre un chevauchement latéral actuel et un chevauchement latéral précédent, divisée par une durée de cycle d'un cycle de détermination, en particulier une durée de cycle de 0,05 s, et
un seuil d'avertissement de taux de changement de chevauchement est défini pour être dans la plage de 1.0 m/s à 1,5 m/s et de préférence 1,3 m/s, et les moyens de jugement (20) sont en outre configurés pour juger que le véhicule cible (60) ne constitue pas un objet d'alerte si le taux de changement de chevauchement dépasse ce seuil d'avertissement de taux de changement de chevauchement.

8. Système de détection de véhicule (10) selon l'une des revendications 1 à 7,
dans lequel les moyens de jugement (20) sont en outre configurés pour déterminer un TTE latéral (Time-to-Exit) du véhicule cible (60) pour sortir de la voie de circulation (DL), en calculant le rapport du chevauchement latéral du véhicule cible (60) à la vitesse latérale du véhicule cible (60), et sont configurés pour le jugement effectué dans des cycles de détermination répétés consistant à déterminer si le TTE est inférieur à 4,0 s ou si le TTE est de 4,0 s ou supérieur à 4,0 s et
- si le TTE est inférieur à 4,0 s, pour régler une temporisation sur une valeur minimale entre le TTE et 1,5 s et pour juger que le véhicule cible (60) ne constitue pas un objet d'alerte jusqu'à expiration de la temporisation,
- si le TTE est de 4,0 s ou supérieur à 4,0 s, pour juger que le véhicule cible (60) constitue un objet d'alerte.

9. Système d'assistance à la conduite (1) pour un véhicule sujet (50), comprenant :
- des moyens de détection (40) pour détecter un véhicule cible (60) dans une zone de détection (DA) située derrière le véhicule sujet (50),
- un système de détection de véhicule (10) selon l'une des revendications 1 à 8, et
- des moyens d'avertissement (30) pour avertir un conducteur du véhicule sujet (50) qu'un véhicule cible (60) est présent dans la zone de détection (DA) ou dans la voie de circulation (DL) uniquement si les moyens de jugement (20) du système de détection de véhicule (10) ont jugé que le véhicule cible (60) constitue un objet d'alerte.

10. Système d'assistance à la conduite (1) selon la revendication 9,
dans lequel les moyens de détection (40) comprennent des capteurs radar pour détecter un véhicule cible (60) dans la zone de détection (DA), en particulier des capteurs radar pour la notification d'approche de véhicule par l'arrière (RTAN) et pour la notification d'approche de véhicule par l'arrière à longue portée (L-RTAN), et dans lequel le jugement des moyens de jugement (20) est de préférence basé sur la détection radar L-RTAN.

11. Véhicule, de préférence véhicule autonome, comprenant un système d'assistance à la conduite (1) selon les revendications 9 ou 10.

12. Procédé mis en œuvre par ordinateur pour détecter un véhicule cible (60) dans une zone de détection (DA) située derrière un véhicule sujet (50), pour commander un système de détection de véhicule (10) selon l'une des revendications 1 à 8, le procédé comprenant les étapes consistant à :
- juger si un véhicule cible (60), qui a été détecté comme s'approchant du véhicule sujet (50) occupant une voie de circulation (DL) par l'arrière dans une première voie adjacente (ALF) qui est d'un côté de la voie de circulation (DL) et lequel véhicule cible (60) a en outre été détecté comme changeant de la première voie adjacente (ALF) en passant en diagonale à travers la voie de circulation (DL) vers une deuxième voie adjacente (ALS) de l'autre côté de la voie de circulation (DL), constitue un objet d'alerte,
- délivrer un résultat de jugement à des moyens d'avertissement (30) qui avertissent un conducteur du véhicule sujet (50) de la présence d'un véhicule cible (60) derrière le véhicule sujet (50) sur la base du fait que les moyens de jugement (20) jugent que le véhicule cible (60) constitue un objet d'alerte, et **caractérisé par** les étapes consistant à
déterminer, sur la base d'un changement d'un chevauchement latéral (65) du véhicule cible (60) dans la zone de détection (DA), lequel chevauchement latéral (65) correspond à une proportion de la largeur du véhicule cible avec laquelle le véhicule cible (60) se trouve effectivement dans la zone de détection (DA), un taux de changement de chevauchement représentant le changement de la taille du chevauchement latéral (65) sur une durée spécifiée, et
juger que le véhicule cible (60) constitue un objet d'alerte ou ne constitue pas un objet d'alerte sur la base du taux de changement de chevauchement.

13. Procédé selon la revendication 12,
dans lequel le taux de changement de chevauchement est défini comme la différence entre un chevauchement latéral actuel et un chevauchement latéral précédent, divisée par une durée de cycle d'un cycle de détermination, en particulier une durée de cycle de 0,05 s.

14. Procédé selon la revendication 13,
dans lequel un seuil d'avertissement de taux de changement de chevauchement est défini pour être dans la plage de 1.0 m/s à 1,5 m/s et de préférence 1,3 m/s, et les moyens de jugement (20) sont en outre configurés pour juger que le véhicule cible (60) ne constitue pas un objet d'alerte si le taux de changement de chevauchement dépasse ce seuil d'avertissement de taux de changement de chevauchement.

15. Programme d'ordinateur comprenant des instructions qui, lorsque le programme est exécuté par un ordinateur, amènent l'ordinateur à exécuter le procédé selon l'une des revendications 12 à 14 pour commander un système de détection de véhicule (10) selon l'une des revendications 1 à 8.
